# EUROPÄISCHE PATENTSCHRIFT

(11) **EP 2 870 606 B1**
(45) Veröffentlichungstag und Bekanntmachung des Hinweises auf die Patenterteilung: **02.03.2016**
(21) Anmeldenummer: 13736807.2
(22) Anmeldetag: 24.06.2013
(51) Int. Cl.: G21C 9/004, G21C 9/06, G21C 19/317

(54) **KERNTECHNISCHE ANLAGE MIT EINER SICHERHEITSHÜLLE UND MIT EINEM DRUCKENTLASTUNGSSYSTEM**
NUCLEAR PLANT WITH A CONTAINMENT SHELL AND WITH A PRESSURE RELIEF SYSTEM
INSTALLATION NUCLÉAIRE COMPORTANT UNE ENCEINTE DE CONFINEMENT ET UN SYSTÈME DE DÉCOMPRESSION

(30) Priorität: 09.07.2012 DE 102012211897
(43) Veröffentlichungstag der Anmeldung: 13.05.2015
(73) Patentinhaber: AREVA GmbH, 91052 Erlangen (DE)
(72) Erfinder: BUHLMANN, Sebastian, 63065 Offenbach a.M. (DE); ECKARDT, Bernd, 63486 Bruckköbel (DE); LOSCH, Norbert, 63067 Offenbach (DE)
(74) Vertreter: Kugler, Jörg
(86) Internationale Anmeldenummer: PCT/EP2013/063100
(87) Internationale Veröffentlichungsnummer: WO 2014/009134

(56) Entgegenhaltungen:
- EP-A1- 0 964 743
- WO-A1-94/01870

## Beschreibung

Die Erfindung betrifft eine kerntechnische Anlage mit einer Sicherheitshülle und mit mindestens einer aus der Sicherheitshülle herausgeführten, mit einem Absperrventil verschließbaren Druckentlastungsleitung, durch die im Entlastungsbetrieb bei geöffnetem Absperrventil ein Druckentlastungsstrom strömen kann.

Bei Stör- und Unfallsituationen in Kernkraftwerken können vergleichsweise große Mengen Wasserstoff und Kohlenmonoxid sowie Dampf in den auch als Containment, Confinement oder Sicherheitshülle bezeichneten Sicherheitsbehälter freigesetzt werden, welcher die Atmosphäre im Inneren hermetisch von der äußeren Umgebung abschirmt.

Ohne Gegenmaßnahmen ist die Anreicherung von brennbaren Gasen in der Sicherheitsbehälteratmosphäre unter Umständen so weit möglich, dass sich detonationsfähige Gemische ausbilden können. Weiterhin können insbesondere bei Dampffreisetzung aus dem Kühlkreislauf Überdrücke auftreten, die den Auslegungsdruck des Sicherheitseinschlusses überschreiten.

In zahlreichen Kernkraftwerken sind bereits unterschiedliche Systeme zum Wasserstoffabbau und zur Überdruckbegrenzung und Druckentlastung des Containments in Unfallsituationen installiert. In der Regel werden derartige Systeme voneinander unabhängig projektiert, ausgelegt und im Betrieb geregelt.

In diesem Zusammenhang gehören beispielsweise katalytische Elemente, je nach Bauform auch als katalytische Rekombinatoren bezeichnet, welche in einem Gasstrom enthaltenen Wasserstoff (H₂) mit Sauerstoff (O₂) im Rahmen einer katalytisch unterstützten exothermen Reaktion flammenlos zu Wasser(-dampf) (H₂O) rekombinieren, zum Stand der Technik. Entsprechendes gilt für die Rekombination von Kohlenmonoxid (CO) mit Sauerstoff (O₂) zu Kohlendioxid (CO₂). Für einen wirksamen H₂/CO-Abbau und zur Vermeidung von unzulässigen, lokal kritischen Konzentrationen sind in der Regel etliche Rekombinatoren im gesamten Containment verteilt angeordnet.

Beispielsweise zeigt WO94/01870 eine kerntechnische Anlage mit einer aus der Sicherheitshülle herausgeführten und mit einem Absperrventil verschließbaren Leitung. Diese Leitung steht mit einer innerhalb der Sicherheitshülle befindlichen Gasstrom-Behandlungsvorrichtung in Verbindung, die einen kaminartigen Strömungskanal mit einer unteren Einströmöffnung und einer oberen Ausströmöffnung aufweist. Oberhalb der unteren Einströmöffnung ist ein Katalysator zum Abbau von Wasserstoff im Strömungskanal angeordnet. Die Leitung weist eine Einlassmündung auf, die unterhalb der oberen Ausströmöffnung angeordnet ist.

Des Weiteren sind sogenannte Ventingsysteme bekannt, mit denen Überdruckzustände durch - in der Regel gefiltertes - Ablassen von Containmentatmosphäre in die Umgebung beherrschbar gemacht werden. Dabei werden passive Systeme bevorzugt, die durch den im Containment vorhandenen Überdruck selber angetrieben werden. Es gibt aber auch Varianten, bei denen der Druckentlastungsstrom aus dem Containment durch elektrisch angetriebene Fördergebläse und dergleichen aktiviert oder unterstützt wird.

Den verschiedenen Varianten gemeinsam sind durch die Sicherheitshülle geführte Druckentlastungsleitungen, die im Normalbetrieb der kerntechnischen Anlage durch mindestens ein Absperrventil verschlossen sind. Für die gewünschte Druckentlastung wird das jeweilige Absperrventil geöffnet, so dass das unter Überdruck stehende Gas-Dampf-Gemisch aus dem Inneren des Containments über die Druckentlastungsleitung nach außen abströmen kann, wo es üblicherweise nach einer mehrstufigen Filterung, Reinigung und Trocknung zum Zweck der Rückhaltung radioaktiv belasteter Flüssigkeiten, Partikel und Aerosole in die Umgebung entlassen wird.

In bestimmten Szenarien ist ein erheblicher H₂ und/oder CO-Anfall kombiniert mit relevantem Druckaufbau möglich, so dass eine frühzeitige Druckentlastung des Containments erforderlich wird. Aufgrund dieser frühzeitigen Druckentlastung ist es denkbar, dass die Maßnahmen zum H₂/CO-Abbau im Containment ihre Wirksamkeit noch nicht erbracht haben.

Somit ist in ungünstigen Fällen davon auszugehen, dass im Druckentlastungsstrom, der auch als Ventgasstrom oder Ventingstrom oder kurz Ventstrom bezeichnet wird, zündfähige H₂/CO-Konzentrationen in Dampf-Luft-Atmosphäre vorliegen. Wird nun dieses Ventgas über nicht temperierte Rohrleitungen und Filtereinrichtungen geleitet, tritt durch die erfolgende Dampfkondensation eine weitere Erhöhung - z. B. Verdopplung - der Konzentrationen der brennbaren Gase auf. Als Resultat können zündfähige und sogar detonationsfähige Gemische gebildet werden, die bei Zündung erhebliche Flammbeschleunigungen verursachen, die die Integrität der Ableitungs- und Rückhalteeinrichtungen gefährden und somit im Eintrittsfall zu hochgradig unerwünschten Umgebungsbelastungen und Kontaminationen führen könnten.

Die Ventingsysteme werden deshalb beispielsweise zur Vermeidung von Anfahrkondensation permanent beheizt oder aber sind nur auf eine Inbetriebnahme nach bereits erfolgtem H₂-Abbau im Containment ausgelegt. Rekombinatorensysteme im Containment werden dementsprechend leistungsmäßig so ausgelegt, dass mit einer Vielzahl von Rekombinatoren ein frühzeitiger H₂-Abbau erfolgt und somit vor Start der Druckentlastung in einer Vielzahl von denkbaren Unfallszenarien eine weitgehend H₂-freie Atmosphäre erreicht werden kann. Zusätzlich werden die Rekombinatoren bislang vorwiegend in den Hauptkonvektionspfaden angeordnet. Typischerweise ist eine hohe Anzahl von Rekombinatoren von beispielsweise 20 bis 100 Stück oder mehr vorgesehen, was zu einer integralen Rekombinator-Durchströmleistung von z. B. 0,3 bis 0,6 oder mehr des gesamten Volumens der Containmentatmosphäre pro Stunde, hier als Luftwechselzahl bezeichnet, führt. Beispielsweise wird somit bei einem Containmentvolumen von 50.000 bis 70.000 m³ eine Rekombinator-Durchströmleistung von 15.000 bis 40.000 m³/h oder mehr erforderlich. Trotzdem kann in den genannten kritischen Szenarien der H₂-Abbau nicht unter allen Umständen rechtzeitig vor Einleitung des Venting gewährleistet werden.

Der vorliegenden Erfindung liegt daher die Aufgabe zugrunde, eine kerntechnische Anlage der eingangs genannten Art anzugeben, die für eine besonders zuverlässige Beherrschung von kritischen Szenarien ausgelegt ist, bei denen es zeitgleich mit der Freisetzung von Wasserstoff und/oder Kohlenmonoxid zu einem erheblichen Druckanstieg innerhalb der Sicherheitshülle kommt. Dabei soll insbesondere der Entstehung oder Ansammlung von explosiven Gasgemischen, die zu schnellen Deflagrationen oder gar Detonationen in den aus der Sicherheitshülle herausführenden Druckentlastungleitungen und in den daran angeschlossenen Apparaturen und Hilfssystemen führen können, entgegengewirkt werden.

Diese Aufgabe wird erfindungsgemäß durch die Merkmale des Anspruchs 1 gelöst.

Demnach ist vorgesehen, dass der jeweiligen Druckentlastungsleitung einlassseitig eine innerhalb der Sicherheitshülle befindliche Gasstrom-Behandlungsvorrichtung vorgeschaltet ist, die einen von einer seitlichen Mantelfläche umschlossenen, kaminartigen Strömungskanal mit einer unteren Einströmöffnung und mit einer oberen Ein- und Ausströmöffnung aufweist, wobei oberhalb oder im Bereich der unteren Einströmöffnung eine erste Gruppe von katalytischen Elementen bzw. Rekombinatoren zum Abbau von Wasserstoff und/oder Kohlenmonoxid im Strömungskanal angeordnet ist, und wobei die Druckentlastungsleitung eine Einlassmündung aufweist, die oberhalb der ersten Gruppe von katalytischen Elementen und unterhalb der oberen Ein- und Ausströmöffnung in der Mantelfläche angeordnet ist, so dass bei einem Störfall mit Freisetzung von Wasserstoff und/oder Kohlenmonoxid in der Sicherheitshülle in einem dem Entlastungsbetrieb vorausgehenden Konvektionsbetrieb bei geschlossenem Absperrventil der Strömungskanal nach dem Prinzip der Naturkonvektion von unten nach oben von einem in der Sicherheitshülle vorhandenen Gasgemisch durchströmt wird, und im Entlastungsbetrieb das Gasgemisch nach dem Prinzip der Zwangsüberströmung von unten und vorzugsweise auch von oben in den Strömungskanal einströmt und als Druckentlastungstrom über die Druckentlastungsleitung abströmt.

Die Begriffe Gasstrom und Gasgemisch beinhalten dabei auch den Fall, dass nennenswerte Dampf- oder Flüssigkeitsanteile darin enthalten sind, umfassen also abkürzend den allgemeineren Fall eines Gas-Dampf-Gemisches oder eines Fluidstroms. Diese Konvention gilt auch für die nachfolgende Beschreibung. Der Begriff Absperrventil steht stellvertretend für Absperrarmaturen jeglicher Art.

Die Erfindung geht von der Überlegung aus, die Entstehung oder Ansammlung explosiver Gasgemische in der Druckentlastungsleitung und den daran angeschlossenen Apparaturen möglichst schon im Ansatz konsequent zu verhindern. Um dabei auf eine der Kondensatbildung in diesen Systemkomponenten entgegenwirkende, ausfallanfällige und apparativ aufwendige Beheizung weitgehend verzichten zu können, sollten bereits im Einmündungsbereich der Druckentlastungsleitung entsprechend niedrige H₂ und CO-Konzentrationen im Druckentlastungsstrom (Ventgasstrom) vorliegen, und zwar möglichst bereits zu Beginn des Entlastungsbetriebes. Dies gelingt in überraschend einfacher Weise, indem zum katalytischen Abbau von Wasserstoff und/oder Kohlenmonoxid ausgelegte Rekombinatoren, insbesondere sogenannte passive autokatalytische Rekombinatoren (PAR), in der genannten Weise unmittelbar vor der auch als Entnahmeanschluss bezeichneten Einlassmündung der Druckentlastungsleitung platziert werden.

Durch Anordnung und Formgebung des der Einlassmündung der Druckentlastungsleitung vorgelagerten Strömungskanals werden dabei zwei unterschiedliche Betriebsmodi und der Übergang zwischen diesen Modi in besonders zweckmäßiger Weise unterstützt: In der dem Entlastungsbetrieb unmittelbar vorausgehenden Betriebsphase stellt sich nämlich bei noch verschlossener Druckentlastungsleitung - angetrieben durch den Kaminzug und durch die am unteren Kaminende infolge der exothermen Rekombinationsreaktion erhöhten Katalysatortemperaturen - mit zunehmender H₂/CO-Konzentration eine von unten nach oben gerichtete Naturkonvektionsströmung in dem Strömungskanal ein. Dadurch werden die Rekombinatoren gewissermaßen auf ihre im anschließenden Entlastungbetrieb gewünschte Betriebstemperatur vorgeheizt. Außerdem wird durch die Konvektion die Zirkulation der Atmosphäre innerhalb der Aufstellungszone - somit auch der lokale H2-Abbau - unterstützt. Der Entlastungsbetrieb wird durch das Öffnen des Absperrventils in der Druckentlastungsleitung eingeleitet. Durch das vorhandene Druckgefälle vom Containmentinnenraum zur äußeren Umgebung strömt nun das im Containment vorhandene Gasgemisch typischerweise nach Art einer Zwangsüberströmung von beiden Kaminenden her - also von oben und von unten - in den Strömungskanal und von dort in die Druckentlastungsleitung ein. Dabei bildet die seitliche Ummantelung des Kamins eine Barriere gegen schräg von oben oder horizontal anströmende "Abwinde" innerhalb des Containments mit erhöhter H₂/CO-Konzentration, die so an einem direkten Eintritt in die Einlassmündung der Druckentlastungsleitung gehindert werden.

In einem Spezialfall der Auslegung könnten die Strömungsverhältnisse im Entlastungsbetrieb derart ausbalanciert sein, dass trotz der offenen oberen Einströmöffnung des kaminartigen Strömungskanals infolge des sich im oberen Bereich einstellenden Staudrucks die Einströmung in die Druckentlastungsleitung im Wesentlichen nur von unten über die untere Einströmöffnung erfolgt. Im Allgemeinen werden aber im Entlastungsbetrieb Anteile von beiden Enden her in die Druckentlastungsleitung einströmen.

Insgesamt wird durch die beschriebenen Maßnahmen auf passive und automatische Weise - also ohne Zufuhr externer Energie bzw. elektrischer Hilfsenergie und ohne aufwendige Regelungsmaßnahmen - bei plötzlicher Entnahme und Freisetzung von Gas aus dem Sicherheitsbehälter, auch während der transienten Anfahrphase, eine kritische Konzentration explosionsfähiger Gase in der Druckentlastungsleitung und in daran den angeschlossenen Rückhalte- und Reinigungseinrichtungen sicher vermieden. Die durch die Entnahme verursachte spontane Strömungsänderung im kaminartigen Strömungskanal, vom konvektiven zum zwangsüberströmten Betrieb, hat nun keinen Einfluss auf die Effizienz der Katalyse mehr, da die Katalysatoren im Kamin durch den in der Vorbetriebsphase antizipierten Leistungsbetrieb sich bereits auf optimaler Betriebstemperatur befinden.

In einer ersten vorteilhaften Variante des erfindungsgemäßen Konzeptes ist oberhalb der Einlassmündung der Druckentlastungsleitung und unterhalb oder im Bereich der oberen Ein- und Ausströmöffnung des Strömungskanals eine zweite Gruppe von katalytischen Elementen zum Abbau von Wasserstoff und/oder Kohlenmonoxid im Strömungskanal angeordnet. Mit anderen Worten ist eine weitere Zone katalytischer Elemente oberhalb des Containmentatmosphäre-Entnahmeanschlusses nahe dem oberen Kaminauslass angeordnet. Dadurch wird beim zwangsüberströmten Entlastungsbetrieb erreicht, dass die von beiden Seiten - von oben und von unten - in den Kaminschacht einströmenden Gase vor dem Eintritt in die Druckentlastungsleitung einer Behandlung durch die jeweils zugeordneten katalytischen Rekombinatoren unterzogen werden, wodurch eine besonders wirkungsvolle Abreicherung der zündfähigen Bestandteile sichergestellt ist. Darüber hinaus führt diese Anordnung im vorhergehenden Konvektionsbetrieb zu einer Verstärkung der Konvektionsströmung und zu einem besonders wirkungsvollen H₂/CO-Abbau (weniger Schlupf) in der Gasstrom-Behandlungsvorrichtung.

In einer zweiten vorteilhaften Variante sind Durchflussbegrenzungsmittel in der Druckentlastungsleitung vorhanden, die im Hinblick auf die Rekombinationsleistung der katalytischen Rekombinatoren derart eingestellt sind, dass im Entlastungbetrieb die Konzentration von Wasserstoff und/oder Kohlenmonoxid im Bereich der Einlassmündung der Druckentlastungsleitung weniger als 50 %, vorzugsweise weniger als 30 %, der entsprechenden Konzentration im Bereich der unteren Einströmöffnung des Strömungskanals beträgt. Alternativ kann auch die Konzentration an der oberen Ein- und Ausströmöffnung des Strömungskanals als Bezugsgröße verwendet werden, jedoch ist näherungsweise davon auszugehen, dass bei einer vorteilhaften Erstreckungshöhe des Strömungskanals von etwa 1 bis 2 m beide Konzentrationen zumeist gleich groß sind und insofern kein wesentlicher Unterschied besteht.

Diese zweite Variante kann mit der ersten Variante kombiniert werden, eignet sich aber gerade auch für den Fall, dass am oberen Ende des Strömungskanals keine zusätzlichen Rekombinatoren vorhanden sind, um im Entlastungsbetrieb ein übermäßiges Rücksaugen / Rückströmen von H₂/CO-reicher Umgebungsatmosphäre über die obere Ein- und Ausströmöffnung des Strömungskanals in die Einlassmündung der Druckentlastungsleitung zu verhindern.

Die nun weitgehende H₂/CO-Abreicherung des Ventgases auf weniger als 50 %, vorzugsweise weniger als 30 %, der Eingangskonzentration vermeidet selbst beim Anfahren der kalten, außerhalb des Sicherheitsbehälters aufgestellten Filter- / Wäschereinrichtungen, dass bei Dampfkondensation kritische H₂/CO-Konzentrationen entstehen können, die die Systemintegrität der Filter- / Wäschereinrichtungen gefährden könnten. Dies ist von essentieller Bedeutung zur Explosionsvermeidung beim Anfahren, aber auch im kontinuierlichen Betrieb.

Im Einklang mit den zuvor beschriebenen Auslegungsgrundsätzen sind die Durchflussbegrenzungsmittel vorteilhafterweise derart eingestellt und die Geometrie des Strömungskanals derart gewählt, dass der im Entlastungsbetrieb in der der Druckentlastungsleitung vorhandene Massenstrom maximal 100 %, vorzugsweise weniger als 80 %, des im Konvektionsbetrieb vorhandenen Massenstroms im Strömungskanal beträgt. Auch diese Maßnahme dient dazu, ein Rücksaugen von H₂/CO-reicher Umgebungsatmosphäre in die Druckentlastungsleitung zu vermeiden, welches andernfalls durch eine die maximal mögliche Rekombinationsleistung überschreitende Anströmung der Katalysatoren eintreten könnte.

In weiterer vorteilhafter Ausgestaltung sind aus dem bereits genannten Grund die Durchflussbegrenzungsmittel derart eingestellt und die Geometrie des Strömungskanals derart gewählt, dass die Anströmgeschwindigkeit an den katalytischen Elementen bzw. Rekombinatoren im Entlastungsbetrieb weniger als 5 m/s, vorzugsweise weniger als 3 m/s beträgt.

Zur Durchflussbegrenzung kann insbesondere mindestens eine Drossel in der Druckentlastungsleitung vorhanden sein. Die Drossel kann auch direkt in oder unmittelbar vor der Einlassmündung der Druckentlastungsleitung angeordnet sein. Zusätzlich oder alternativ können die in die Druckentlastungsleitung geschalteten Komponenten, wie etwa Filtereinrichtungen, Wäschereinrichtungen, Absperrventile oder einzelne Leitungsabschnitte zu der gewünschten Drosselwirkung beitragen bzw. diese erbringen.

Die Strömung im vorgelagerten Strömungskanal (Kamin) kann durch dessen geometrische Parameter wie Höhe, Querschnittsfläche, Größe und Anordnung der Ein- und Auslassöffnungen sowie durch strömungsführende bzw. strömungsbeeinflussende Einbauten und dergleichen im Hinblick auf die genannten Auslegungsziele beeinflusst werden.

Zu den Einbauten, deren Geometrie und Anordnung die Konvektionsströmung sowie die Zwangsströmung im Strömungskanal beeinflussen, zählen insbesondere die katalytischen Elemente, die typischerweise durch mehrere plattenartige Elemente gebildet sind. Die katalytischen Elemente sind vorzugsweise offen zur Atmosphäre, vorwiegend vertikal ausgerichtet, weitgehend parallel und auf unterschiedlichen Höhen (gestaffelt) angeordnet, um zwischen den Elementen und den Elementbereichen einen Auftrieb zu erzeugen. Weiterhin wird bevorzugt ein Abstand zwischen den überströmten Elementen von > 5 mm, bei einer Höhe von > 10-mal des Abstandes und einem Öffnungsverhältnis von > 50 % eingestellt. Das Öffnungsverhältnis bezeichnet hierbei das Verhältnis der frei durchströmbaren Querschnittsfläche zwischen den Elementen zu der von den Elementen insgesamt überdeckten Querschnittsfläche im Strömungskanal. In einer möglichen Variante können die katalytischen Elemente direkt in/an der Ein- / Ausströmöffnung des Strömungskanals angeordnet sein.

Der kaminartige Strömungskanal kann auch in einer rohrleitungsähnlichen Ausführung mit am Umfang verteilten, zur Atmosphäre offenen katalytischen Zonen realisiert werden. Dabei können mehrere strömungsmäßig parallele Leitungsstränge vorgesehen sein.

Die auch als Atmosphären-Entnahmeanschluss bezeichnete Einlassmündung der Druckentlastungsleitung wird vorzugsweise je nach Anordnung der katalytischen Rekombinatoren im Strömungskanal unterschiedlich positioniert. So ist bei nur einer tiefliegenden katalytischen Zone bzw. Sektion der Entnahmeanschluss vorzugsweise im unteren Teil des Strömungskanals -jedoch oberhalb der tiefliegenden katalytischen Sektion - angebracht, um durch den vergleichsweise langen oberen Strömungsweg ein Einströmen von H₂/CO-reichem Gasgemisch über die obere Ein- / Ausströmöffnung des Strömungskanals in die Druckentlastungsleitung zu erschweren. Bei Einrichtungen mit zwei katalytischen Sektionen, nämlich einer tiefliegenden und einer hochliegenden katalytischen Sektion, ist der Entnahmeanschluss vorzugsweise in der Mitte oder in dem unteren Teil des Strömungskanals anzulegen.

Generell werden im Betrieb - infolge der exothermen Reaktion - permanent erhöhte Katalysatortemperaturen von vorzugsweise mehr als 100 °C bis zu 900 °C angestrebt und auch erreicht. In vorteilhafter Ausführung sind die katalytischen Rekombinatoren hinsichtlich ihrer Betriebstemperatur im Entlastungsbetrieb derart ausgelegt, dass sie bei einer Wasserstoffkonzentration des anströmenden Gasgemisches von mehr als 7 Vol.-% als Zünder wirken. Das heißt, es erfolgt eine präventive Zündung des anströmenden Gasgemischs, wenn zündfähige Konzentrationen von beispielsweise 7 bis 10 Vol.-% H2-Anteil vorliegen, durch die hohen Oberflächentemperaturen - von vorzugsweise mehr als 700 °C - der katalytischen Elemente. Der Vorteil der präventiven Zündung liegt darin, dass die Zündung und die anschließende Verbrennung vergleichsweise kontrolliert und moderat nach Art einer Deflagration ablaufen mit noch geringen Flammbeschleunigungen und Volumenverschiebungen im Vergleich zu einer Detonation. Durch die Zündung am Katalysatorelement, vor dem Einströmen in das eigentliche Entnahmesystem, wird also auch in Betriebsphasen mit hoher Konzentration von brennbaren Gasen im Containment eine wirksame Konzentrationsbegrenzung im Ventsystem erreicht, so dass die Sicherheit nun in allen Betriebsfällen im Ventsystem besonders zuverlässig gewährleistet ist.

Vorteilhafterweise sind die jeweilige Gasstrom-Behandlungsvorrichtung und der zugehörige Ventgas-Entnahmeanschluss in Bezug auf die Gesamthöhe der Sicherheitshülle im unteren Drittel, vorzugsweise im unteren Viertel, und somit unterhalb der Hauptkonvektionspfade in der Sicherheitshülle angeordnet.

Besonders vorteilhaft ist es, wenn mehrere - etwa 5 oder mehr - in Bezug auf die Gesamthöhe der Sicherheitshülle im unteren Drittel bzw. im unteren Viertel angeordnete Gasstrom-Behandlungsvorrichtungen für den Druckentlastungsstrom sowie mehrere darüber liegend angeordnete, nicht direkt auf den Druckentlastungsstrom einwirkende, zusätzliche katalytische Rekombinatoren zum Abbau von Wasserstoff und/oder Kohlenmonoxid vorhanden sind, wobei die katalytischen Rekombinatoren der direkt mit dem Ventsystem zusammenwirkenden Gasstrom-Behandlungsvorrichtungen zusammen weniger als 20 % der verfügbaren Gesamt-Rekombinationsleistung erbringen. Die zusätzlichen katalytischen Rekombinatoren wiederum sind vorzugsweise so verteilt, dass in der oberen Hälfte der Sicherheitshülle mindestens 70 % der verfügbaren Gesamt-Rekombinationsleistung erbracht werden.

Durch diese Platzierung und Verteilung der Gasstrom-Behandlungsvorrichtungen im Containment - insbesondere auch in abseits der Hauptkonvektionspfade liegenden Aufstellungsräumen - wird vorteilhafterweise durch Ausnutzung der sich einstellenden Stratifikation des Wasserstoffs über die Containmenthöhe eine zusätzliche systematische Begrenzung der Wasserstoffkonzentration im Ventgasstrom auf weniger als ¼ bis maximal ½ der Durchschnittskonzentration im Sicherheitsbehälter ermöglicht.

Die Platzierung der Gasstrom-Behandlungsvorrichtungen erfolgt vorzugsweise in Raumabschnitten des Containments, die abseits der Hauptkonvektionspfade liegen. Insbesondere als geeignet erweisen sich Aufstellungsräume im untersten Drittel des Containments, die teilgeschlossene Decken und/oder Böden (insbesondere ohne Lichtgitter) und Wände aufweisen und idealerweise nach Art eines Sackraums ausgeführt sind. Durch eine solche Auswahl des Aufstellungsortes wird idealerweise die antizipierte Stratifikation des Wasserstoffes innerhalb der oberen Containmentabschnitte (sprich in den oberen zwei Dritteln der Containmenthöhe) ausgenutzt, so dass eine zusätzliche systematische Begrenzung der Wasserstoffkonzentration im Ventgasstrom auf weniger als ¼ bis maximal ½ der Durchschnittskonzentration im Sicherheitsbehälter ermöglicht wird.

Darüber hinaus erfolgt ein H₂/CO-Abbau mit den weiteren katalytischen Rekombinatoren, die verteilt über das Containment, nun vorzugsweise im - höhenmäßig - mittleren Drittel verdichtet (z. B. > 50 % der Gesamtzahl) und auch im oberen Drittel des Containments, angeordnet sind. Durch diese Platzierung in den Hauptkonvektionspfaden und den Gebieten mit höherer Konzentration (Stratifikation) wird die H₂-Abbau-leistung pro Rekombinator noch einmal erhöht.

Durch diese neue Anordnung, in Kombination mit der Venting-Entnahmefunktion, kann nun überraschenderweise auch die zu installierende Gesamt-Rekombinationsleistung mit Rekombinatordurchströmraten von bislang 15.000 bis 40.000 m³/h oder mehr und mit Luftwechselzahlen von bislang L > 0,3 h bis 0,6 h oder mehr, auf 2/3 bis ½ des gegenwärtig als notwendigen erachteten Maßes reduziert werden, entsprechend einer nunmehr erreichbaren Luftwechselzahl im Containment von L < 0,3 h bis 0,1 h oder weniger. Dies wird erreicht, da nun verstärkt im hochliegenden Hochkonzentrationsbereich, meist in dampfinertisierter Atmosphäre, der H₂-Abbau sehr effektiv erfolgt. Gleichzeitig wird der tiefliegende Bereich im Falle von Venting durch die neuen Einrichtungen und deren Anordnung konzentrationsmäßig so abgesichert, dass eine dem Ventbetrieb vorangehende Konzentrationsabsenkung - um sicheres Venting überhaupt zu ermöglichen - nicht mehr erforderlich ist.

In weiterer vorteilhafter Ausgestaltung ist in die Druckentlastungsleitung zumindest eine innerhalb der Sicherheitshülle befindliche Kühlvorrichtung für den Druckentlastungsstrom geschaltet.

Dabei kann auch eine Verzweigung des Ventstroms auf mehrere parallele Teilströme vorgesehen sein, von denen zumindest ein Teil gekühlt wird.

Durch die Kombination der Ventgas-Entnahmeeinrichtung mit einer nachgeschalteten, wiederum passiv betriebenen Kühlung, wird die Temperatur, des durch die katalytische Reaktion erhitzten Ventgases, von beispielsweise 400 bis 500 °C auf ca. 150 bis 300 °C reduziert. Hierdurch kann nun auch im Bereich der Containmentdurchführung und der nachfolgenden Einrichtungen eine unzulässige Temperaturbelastung oberhalb der Auslegung vermieden werden.

Die Kühleinrichtung wird bevorzugt innerhalb des Sicherheitsbehälters primär in Strömungsrichtung direkt vor der Containmentdurchführung oder im Bereich interner Filter aufgestellt. Die Kühleinrichtung wird vorzugsweise konvektiv mit Hilfe der umgebenden Containmentatmosphäre gekühlt oder über die Verdampfung einer Flüssigkeit. Mit anderen Worten: Die Kühlvorrichtung ist bevorzugt für eine konvektive Rückkühlung durch das in der Sicherheitshülle befindliche Gasgemisch und/oder Verdunstungs- / Verdampfungskühlung ausgelegt.

Bei Anordnung der Kühlelemente im Sumpfbereich oder im Bereich massiver Betonstrukturen kann durch direkten oder indirekten Kontakt mit diesen Massen (Kühlmedium oder Beton etc.) die Wärmeabfuhr intensiviert werden und somit eine Verkleinerung der Einrichtung bei gleichbleibender Kühlleistung erfolgen. Durch passive Benetzung der Kühlflächen mit ablaufendem Kondensat aus dem Containment wird eine Reinigung und gleichzeitige Erhöhung der Effektivität der Kühleinrichtung erreicht. Durch die Ausführung der Kühlflächen als schmutzabweisende, glatte Oberflächen, mit strahlenbeständigen Beschichtungen oder auch als glatte Edelstahloberflächen, die ggf. zusatzbehandelt wurden (z. B. poliert, elektropoliert etc.), wird auch in schweren Störfällen ein dauerhaft effektiver Wärmeübergang ermöglicht. Zusätzlich kann die Betriebssicherheit durch Anordnung hinter Trümmerschutzwänden entscheidend gesteigert werden.

Im Bereich der Containmentdurchführung ist die Druckentlastungsleitung vorzugsweise mit einer thermischen Isolierung nach Art einer Thermoschutzverkleidung versehen, so dass hier auch Ventgastemperaturen oberhalb der Durchführungs-Auslegungstemperaturen von z. B. 150 bis 200 °C oder mehr möglich werden. Dies führt zu einer entscheidenden Verkleinerung der Kühleinrichtung.

Die jeweilige Kühleinrichtung umfasst vorzugsweise einen zum Containment hin eher offenen Strahlungswärmetauscherteil und einen Konvektionswärmetauscherteil.

Der Wärmeübertrag vom Entlastungsstrom auf das umgebende Kühlmedium kann beispielsweise über
- Plattenkühlelemente mit offenen Umluftkühlkanälen
- Rohrkühlelemente, ggf. mit Rippenrohren
- Galeriekühlelemente, die besonders günstig in ihrer Form den Betonstrukturen angepasst werden können, und/oder
- weitere Wärmetauscher-Bauweisen
erfolgen.

Grundsätzlich werden hierbei weitgehend offene, drucklose Flachkammerkonstruktionen bevorzugt, um den konstruktiven Aufwand zu minimieren. Hierbei ist auch ein modularer Aufbau durch Zusammenfügen von mehreren vorgefertigten Modulen möglich. Besonders vorteilhaft ist eine Bauweise, bei der der kaminartige Strömungskanal mit den katalytischen Rekombinatoren ein erstes Modul bildet, und die Kühlvorrichtung ein zweites Modul bildet, wobei beide Module bevorzugt direkt nebeneinander - insbesondere Wand an Wand - aufgestellt werden.

Zusätzlich kann der Strömungsweg des Ventgases im Inneren der Kühlvorrichtung günstigerweise in einem dem Entlastungsbetrieb vorausgehenden Bereitschaftszustand noch mit Berstfolien verschlossen sein, die nach Öffnen des Absperrventils in der Druckentlastungsleistung aufgrund des dann anliegenden Differenzdruckes (passiv) öffnen.

Die katalytischen Elemente der Rekombinatoren werden vorzugsweise unter Verwendung der katalytisch aktiven Edelmetalle Palladium (Pd) und/oder Platin (Pt) und/oder Vanadium (V) auf keramischen Trägern oder metallischen Trägern mit keramischer Beschichtung (Coating) aufgebaut. Es können monometallische Basismaterialien oder auch Mischungen dieser Edelmetalle zum Einsatz kommen, die ggf. mit anderen Metallen dotiert sind, etwa Kupfer (Cu) oder Nickel (Ni).

Um unter schwierigsten Unfallbedingungen sicher betrieben werden zu können, sind - bezogen auf den gesamten Katalysator inklusive Trägerelementen - hohe Edelmetallanteile von > 0,2 Gew.-% des keramischen Trägers, vorzugsweise > 0,5 Gew.-% des keramischen Trägers vorgesehen.

Die katalytischen Elemente, können hierbei beispielsweise
- auf metallischen oder keramischen Trägern
- als Schüttung innerhalb von offenen Trägern und/oder
- als Gitter oder Waben und dergleichen
angeordnet sein, etwa auch in Sandwichbauweise.

Es wird hierbei bevorzugt eine offenporige Struktur mit einem Öffnungsverhältnis von > 50 %, vorzugsweise > 90 % eingestellt, so dass eine Verblockung mit Aerosolen sicher vermieden werden kann.

Durch diese Kombination können Alterungseffekte (Aging), hervorgerufen durch den Einsatz in der Containmentatmosphäre, wie z. B. durch Sorption von Kohlenwasserstoffen und Schweißdämpfen, Aerosolbeladung, etc. ohne den sonst nach kurzer Standby-Zeit auftretenden Verlust der sicherheitswichtigen Selbststarterfunktion über Betriebsräume von vielen Jahren (> 5 Jahre, bevorzugt > 10 Jahre) kompensiert werden und somit die Sicherheit entscheidend erhöht und gleichzeitig die Kosten reduziert werden, da ein zyklischer Austausch im Rahmen von Instandhaltungs- und Revisionsarbeiten vermieden werden kann.

Schließlich sind in zweckmäßiger Ausgestaltung in einem außerhalb der Sicherheitshülle befindlichen Abschnitt der Druckentlastungsleitung Filter und/oder Wäscher zur Reinigung des Druckentlastungsstroms und zur Aktivitätsrückhaltung angeordnet. Insbesondere können dabei die bekannten Nasswäscher vom Typ Venturiwäscher verwendet werden, die bei geeignet eingestellten Anströmgeschwindigkeiten eine besonders wirkungsvolle Aerosolrückhaltung, insbesondere im Hinblick auf jodhaltige Bestandteile, ermöglichen.

Die mit der Erfindung erzielten Vorteile bestehen insbesondere darin, dass durch die geschickte Kombination katalytischer Elemente bzw. Rekombinatoren mit einer Einrichtung zur Entnahme eines Ventgasstroms im Sinne einer eng abgestimmten räumlichen und strömungsmäßigen Korrelation, insbesondere bei geeigneter Einstellung der Strömungsgeschwindigkeiten und der Massenströme, trotz relevanter H₂/CO-Konzentrationen eine frühzeitige Druckentlastung (Venting) des Containments ermöglicht wird, ohne dass eine Gefährdung der nachgeschalteten Filter- und Reinigungseinrichtungen erfolgt und weiterhin auch die im Containment zu installierende Rekombinatorleistung reduziert werden kann. Das gesamte Druckentlastungssystem - mit Ausnahme der Absperrventile - arbeitet vollständig passiv ohne Zufuhr elektrischer Hilfsenergie und im Wesentlichen ohne bewegliche Teile. Somit kann eine wesentliche Erhöhung der Sicherheit in kerntechnischen Anlagen in schweren Störfallsituationen erreicht werden.

Verschiedene Ausführungsbeispiele der Erfindung werden nachfolgend anhand von Zeichnungen näher erläutert. Dabei zeigen in jeweils stark vereinfachter und schematisierter Darstellung
- FIG. 1: einen Ausschnitt aus einer kerntechnischen Anlage mit einer Sicherheitshülle und mit einem Druckentlastungssystem für die Sicherheitshülle in einem ersten Betriebszustand,
- FIG. 2: den Ausschnitt gemäß FIG. 1 für einen zweiten Betriebszustand des Druckentlastungssystems, und

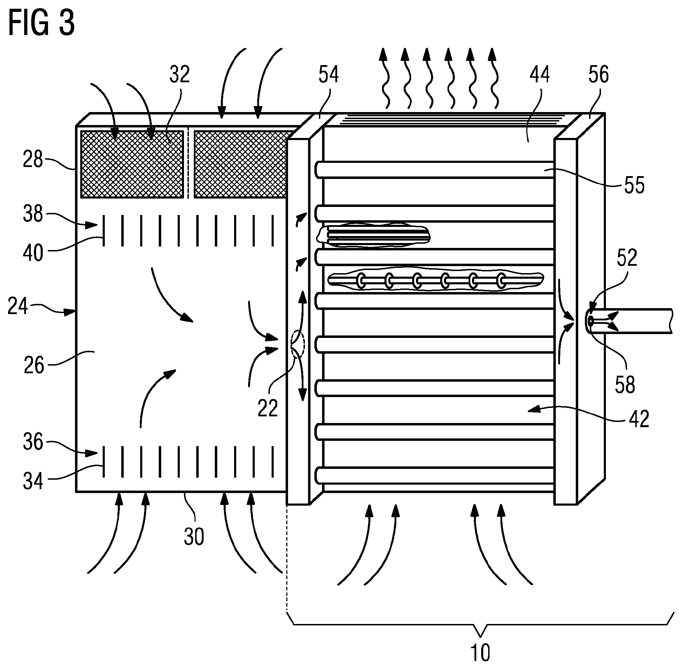

- FIG. 3: eine teilweise geschnittene perspektivische Ansicht einer mit katalytischen Rekombinatoren ausgestatteten Behandlungsvorrichtung und einer nachgeschalteten Kühlvorrichtung für einen Druckentlastungsstrom als Bestanteile des Druckentlastungssystems gemäß FIG. 1 und 2.

Gleiche oder gleichwirkende Teile sind in allen Figuren mit denselben Bezugszechen versehen.

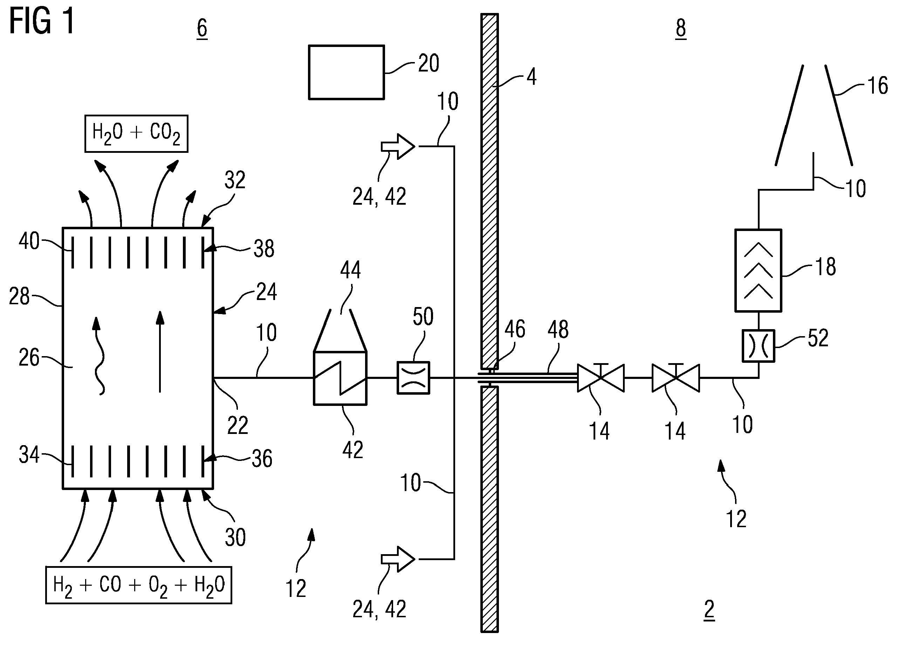

Bei der in FIG. 1 ausschnittsweise dargestellten kerntechnischen Anlage 2 handelt es sich um ein Kernkraftwerk, beispielsweise vom Typ Druckwasserreaktor oder Siedewasserreaktor. Die kerntechnische Anlage 2 weist eine auch als Containment bezeichnete Sicherheitshülle 4, hier in Form eines nur ausschnittsweise sichtbaren kuppelförmigen Stahlmantels, auf. Die Sicherheitshülle 4 schirmt die nuklearen und nicht-nuklearen Systemkomponenten im Innenraum 6 hermetisch vom der Umgebung im Außenraum 8 ab.

Um bei einer Unfallsituation infolge von Dampf- und Gasfreisetzung auftretenden Überdruck im Innenraum 6 abbauen zu können, ist eine Druckentlastungsleitung 10 durch die Sicherheitshülle 4 geführt. Die Druckentlastungsleitung 10 bildet einen Bestandteil eines Druckentlastungssystems 12. Im Normalbetrieb der kerntechnischen Anlage 2 ist die Druckentlastungsleitung 10 durch zwei außerhalb der Sicherheitshülle 4 angeordnete, in Reihe geschaltete Absperrventile 14 verschlossen. Zur Einleitung der Druckentlastung werden die beiden Absperrventile 14 geöffnet, so dass ein Druckentlastungsstrom infolge des Druckgefälles vom einlassseitigen Ende der Druckentlastungleitung 10 innerhalb der Sicherheitshülle 4 zum auslassseitigen Ende außerhalb der Sicherheitshülle 4, hier in einem Kamin 16 angeordnet, strömen kann. Dadurch wird die gewünschte Druckminderung im Innenraum 6 der Sicherheitshülle 4 bewirkt.

Um beim Entlastungsbetrieb die Umweltbelastung mit radioaktiven Zerfallsprodukten in zulässigen Grenzen zu halten, erfolgt eine Filterung und Reinigung des Druckentlastungsstroms mit Hilfe entsprechender Filter- und/oder Reinigungsvorrichtungen 18, die stromabwärts der Absperrventile 14 außerhalb der Sicherheitshülle 4 in die Druckentlastungsleitung 10 geschaltet sind. Beispielsweise können Nasswäscher vom Typ Venturiwäscher vorgesehen sein, die eine hocheffektive Zurückhaltung von im Druckentlastungstrom mitgeführten Aktivitätsträgern, etwa in Gestalt von Partikeln und Aerosolen, bewirken. Daneben können auch Trockenfilter und katalytische Reinigungseinrichtungen oder ähnliches vorhanden sein.

Das Druckentlastungsystem 12 ist zur Beherrschung kritischer Störfälle ausgelegt, bei denen es zeitgleich zu einem massiven Druckanstieg zu einer nennenswerten Freisetzung von Wasserstoff H₂ und/oder Kohlenmonoxid CO im Innenraum kommt, so dass ohne Einleitung von Gegenmaßnahmen lokal oder sogar global zündfähige / detonationsfähige Gasgemische entstehen könnten.

Um dies zu verhindern, sind in an sich bekannter Weise katalytische Rekombinatoren 20 im Innenraum 6 der Sicherheitshülle 4 verteilt angeordnet, die bei Anströmung durch die umgebende Atmosphäre darin enthaltenen Wasserstoff H₂ mit Sauerstoff O₂ flammenlos zu Wasser(-dampf) H₂O rekombinieren, und/oder entsprechend Kohlenmonoxid CO mit Sauerstoff O₂ zu Kohlendioxid CO₂, welches innerhalb der Sicherheitshülle 4 inertisierend wirkt, rekombinieren.

Allerdings dauert es bei einem kritischem Störfall bzw. Unfall (inkl. Kernschmelzszenarien) in der Regel eine kurze Zeit, bis die Rekombinatoren 20 ihre vorgesehene Betriebstemperatur erreichen und eine erhebliche Zeit, bis durch die projektierte Rekombinationsleistung ein gravierender H₂-Konzentrationsabbau erreicht werden kann. Es kann daher das Problem auftreten, dass bei einem zeitgleichen massiven Druckanstieg in der Sicherheitshülle 4 eine auch als Venting bezeichnete Druckentlastung zu einem vergleichsweise frühen Zeitabschnitt des Störfallverlaufs notwendig wird, in dem die im Gebäude verteilten katalytischen Rekombinatoren 20 noch nicht ihre volle Wirksamkeit erbracht haben.

Bei derartigen Szenarien könnte es daher zu einem Einströmen zündfähiger Gas-Dampf-Gemische in die Druckentlastungsleitung 10 kommen. Durch eine zumindest partielle Kondensation enthaltenen Dampfes in den anfänglich vergleichsweise kalten Leitungsabschnitten im Außenraum 8 würden sich die Konzentrationen der sicherheitskritischen Bestandteile Wasserstoff H₂ und Kohlenmonoxid CO im weiteren Verlauf des Transportweges sogar noch erhöhen. Dadurch könnte in ungünstigen Fällen die Grenze zur Detonationsfähigkeit überschritten werden, mit nachteiligen Folgen für die Integrität der Filter- und/oder Reinigungsvorrichtungen 18. Wollte man deren Zerstörung bei derartigen Ereignissen sicher ausschließen, wäre eine entsprechend kostenintensive und aufwändige massive und abgesicherte Bauweise erforderlich.

Um dies zu vermeiden, ist bei dem Druckentlastungssystem 12 gemäß FIG. 1 die auch als Entnahmeanschluss bezeichnete Einlassmündung 22 der Druckentlastungsleitung 10 in besonderem Maße gegen kritische Konzentrationswerte von Wasserstoff H₂ und/oder Kohlenmonoxid CO im einströmenden Gasstrom abgesichert. Zu diesem Zweck ist der Einlassmündung 22 eine Gasstrom-Behandlungsvorrichtung 24 strömungsmäßig vorgeschaltet, die das einströmende Gasgemisch hinsichtlich seiner Zusammensetzung geeignet konditioniert.

Die Gasstrom-Behandlungsvorrichtung 24 umfasst dazu einen kaminartig ausgebildeten, im Wesentlichen vertikal orientierten Strömungskanal 26, der seitlich von einer beispielsweise durch Wandelemente oder durch andere Systemkomponenten gebildeten Mantelfläche 28 begrenzt ist und im Wesentlichen für anströmendes Gas undurchdringlich ist. Am unteren Ende besitzt der Strömungskanal 26 eine - hier im Beispiel stirnseitig angeordnete - Einströmöffnung 30, und am oberen Ende ist eine entsprechende Ein- und Ausströmöffnung 32 vorhanden. Die Einlassmündung 22 der Druckentlastungsleitung 10 ist in Bezug auf die Gesamthöhe des Strömungskanals 26 in etwa mittig in der Mantelfläche 28 angeordnet. Anstelle einer quasi punktuellen Einlassmündung 22 kann auch eine sich um den Umfang der Mantelfläche 28 oder zumindest einen Teil davon erstreckende Ringschlitzgeometrie oder ähnliches als Einlass in die Druckentlastungsleitung 10 vorgesehen sein. Auch hinsichtlich ihrer eigenen Höhenausdehnung kann die Einlassmündung 22 abweichend von der Darstellung in FIG. 1 ausgedehnter ausgeführt sein, solange nur sichergestellt ist, dass der einströmende Gasstrom zuvor die katalytisch wirksamen Zonen passiert hat (siehe unten).

Etwas oberhalb der Einströmöffnung 30 und unterhalb der Einlassmündung 22 der Druckentlastungsleitung 10 sind mehrere katalytische Elemente bzw. Rekombinatoren 34 zur Rekombination von Wasserstoff H₂ mit Sauerstoff O₂ zu Wasser(-dampf) H₂O und/oder von Kohlenmonoxid CO und Sauerstoff O₂ zu Kohlendioxid CO₂ im Querschnitt des Strömungskanals 26 und/oder randseitig über den Innenumfang der Mantelfläche 28 verteilt angeordnet. Diese im Beispiel plattenförmig ausgestalteten und parallel zueinander in vertikaler Ausrichtung angeordneten Elemente bilden zusammen eine erste (untere) katalytische Zone 36 am unteren Ende des Strömungskanals 26. Eine zweite (obere) katalytische Zone 38 dieser Art ist am oberen Ende des Strömungskanals 26, knapp unterhalb der Ein- und Ausströmöffnung 32 und oberhalb der Einlassmündung 22 der Druckentlastungsleitung 10 angeordnet und umfasst die katalytischen Rekombinatoren 40.

In einer hier nicht dargestellten alternativen Variante ist nur die untere katalytische Zone 36 vorhanden. Die Einlassmündung 22 der Druckentlastungsleitung 10 ist dann vorzugsweise tiefer liegend im unteren Bereich des Strömungskanals 26, aber noch oberhalb der katalytischen Rekombinatoren 34 zu positionieren.

Stromabwärts der Einlassmündung 22, außerhalb des Strömungskanals 26 und noch innerhalb der Sicherheitshülle 4 ist eine Kühlvorrichtung 42 für den sich im Entlastungsbetrieb einstellenden Druckentlastungsstrom in die Druckentlastungsleitung 10 geschaltet. Die Kühlvorrichtung 42 ist für eine überwiegend konvektive Rückkühlung durch die in der Sicherheitshülle 4 vorhandene Atmosphäre ausgelegt und wird ggf. durch Verdampfungskühlung und/oder Strahlungswärmeabgabe an die Umgebung unterstützt.

Die Kühlvorrichtung 42 bildet dazu bevorzugt ebenfalls einen kaminartigen, im Gegensatz zum Strömungskanal 26 der Gasstrom-Behandlungsvorrichtung 24 aber teilweise zur Umgebung hin offenen Strömungskanal 44 aus, durch den mindestens ein Leitungsabschnitt der Druckentlastungsleitung 10 zum Zweck der Wärmeabgabe an die vorbeiströmende Atmosphäre geführt ist. Abweichend von der schematischen Darstellung in FIG. 1 kann innerhalb der Kühlvorrichtung 42 oder bereits weiter stromaufwärts eine Verzweigung der Druckentlastungsleitung 10 auf mehrere Teilleitungen bzw. Teilströme realisiert sein, die jedoch vor der Durchführung 46 durch die Sicherheitshülle 4 zweckmäßigerweise wieder zusammengeführt werden. Zur Realisierung der Verdampfungskühlung kann eine hier nicht dargestellte Flüssigkeits-Sprühvorrichtung, etwa mit einer strömungsmäßigen Anbindung an ein Kondensat-Sammelbecken oder dergleichen, vorhanden sein.

Im Bereich der Durchführung 46 bis hin zu dem ersten Absperrventil 14 ist die Druckentlastungsleitung 10 im Ausführungsbeispiel mit einer nach Art eines äußeren Mantels ausgebildeten Thermoschutzverkleidung 48 versehen.

Des Weiteren sind in der Druckentlastungsleitung 10 ein oder mehrere, fest eingestellte oder optional einstellbare bzw. regelbare Elemente zur Durchflussbegrenzung (Mengenbegrenzung) des Ventstroms ausgebildet. Hier im Ausführungsbeispiel sind dies insbesondere ein erstes Drosselventil 50 im Leitungsabschnitt zwischen der Kühlvorrichtung 42 und der Durchführung 46 durch die Sicherheitshülle 4 und ein zweites Drosselventil 52 im Leitungsabschnitt zwischen dem zweiten Absperrventil 14 und den stromabwärts dazu angeordneten Filter- und/oder Reinigungsvorrichtungen 18. Im Prinzip kann eine derartige Durchflussbegrenzung aber auch an anderer Stelle der Druckentlastungsleitung 10 ausgebildet sein, etwa durch entsprechende Ausgestaltung ohnehin vorhandener strömungsführender Komponenten, oder durch das Zusammenwirken verschiedener Komponenten zustande kommen.

Die Betriebsweise des Druckentlastungssystems 12 ist die Folgende:
Im Normalbetrieb der kerntechnischen Anlage 2 sind die beiden Absperrventile 14 in der Druckentlastungsleitung 10 verschlossen, so dass kein Druckentlastungsstrom entweichen kann - allenfalls kann eine ganz geringe Gasmenge in den Anfangsabschnitt der Druckentlastungleitung 10 einströmen, bis der Staudruck weiteres Einströmen verhindert. Abgesehen von einer sich aufgrund der Temperaturverteilung in der Sicherheitshülle 4 einstellenden Naturkonvektion findet noch keine nennenswerte Durchströmung der Gasstrom-Behandlungsvorrichtung 24 statt.

Dies ändert sich bei einem Störfall mit Freisetzung von Wasserstoff H₂ und/oder Kohlenmonoxid CO in der Sicherheitshülle 4. Durch die ihre Tätigkeit aufnehmenden katalytischen Elemente bzw. Rekombinatoren 34, 40 der ersten (unteren) und ggf. der zweiten (oberen) Zone und die dadurch bewirkte lokale Temperaturerhöhung wird der Kaminzug-Effekt im Strömungskanal 26 unterstützt und die dort tendenziell vorhandene Naturkonvektion verstärkt. Das heißt, der Strömungskanal 26 wird von unten nach oben von der sich erwärmenden Gasströmung durchströmt, wobei gleichzeitig die beschriebene Rekombinationsreaktion stattfindet und die katalytischen Rekombinatoren 34, 40 innerhalb kürzester Zeit ihre optimale Betriebstemperatur annehmen. Dieser Zustand ist in FIG. 1 dargestellt, wobei die Strömungsverhältnisse durch entsprechende Strömungspfeile dargestellt sind.

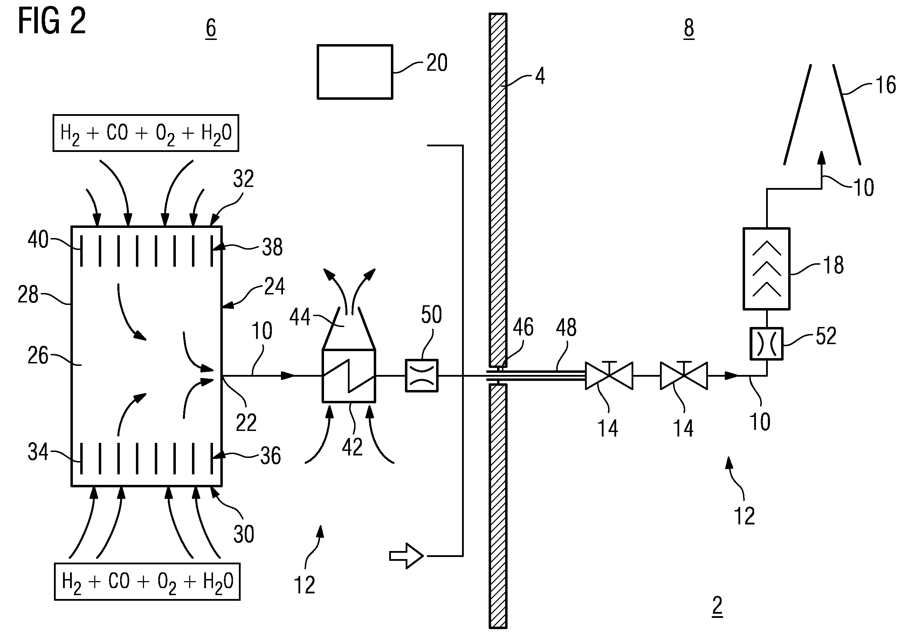

Falls sich nun gleichzeitig ein starker Überdruck im Innenraum 6 aufbaut, kann der Überdruckabbau nach nur kurzer Naturkonvektionsphase mit Vorheizung der Rekombinatoren 34, 40 von beispielsweise < 20 Minuten durch Öffnen der Absperrventile 14 in der Druckentlastungsleitung 10 eingeleitet werden. Dieser Entlastungsbetrieb (Venting) ist hinsichtlich der vorherrschenden Strömungsverhältnisse in FIG. 2 veranschaulicht. Durch das Einströmen des Gasstroms in die Druckentlastungsleitung 10 und das anschließende Entweichen über den Kamin 16 stellen sich nämlich gegenüber der vorherigen Naturkonvektion geänderte Strömungsverhältnisse ein, die schlagwortartig als Zwangsüberströmung charakterisiert werden können. Es strömt nun sowohl von unten als auch von oben Containmentatmosphäre in den Strömungskanal 26 ein, wird in der unteren katalytischen Zone 36 und - sofern vorhanden - in der oberen katalytischen Zone 38 hinsichtlich der Bestandteile Wasserstoff H₂ und Kohlenmonoxid CO konzentrationsmäßig abgereichert und tritt dann dermaßen vorbehandelt über die Einlassmündung 22 in die Druckentlastungsleitung 10 ein.

In der stromabwärts angeordneten Kühlvorrichtung 42 wird der infolge der Rekombinationsreaktion an den katalytischen Rekombinatoren 34, 40 erwärmte Druckentlastungsstrom auf die beschriebene Weise durch überwiegend konvektive Wärmeabgabe an die Containmentatmosphäre von beispielsweise eingangsseitig 400 bis 500 °C auf ausgangsseitig 150 bis 300 °C gekühlt. Dieser Vorgang führt seinerseits zu einer durch Kaminzug unterstützten Naturkonvektions-Umwälzung der Containmentatmosphäre im Außenbereich der Kühlvorrichtung 42, in FIG. 2 ebenfalls durch Strömungspfeile angedeutet.

Durch die Drosselventile 50, 52 wird der Massenstrom durch die Druckentlastungsleitung 10 derart begrenzt, dass er vorzugsweise weniger als 80 % des im Naturkonvektionsbetrieb gemäß FIG. 1 vorhandenen Massenstroms durch den Strömungskanal 26 beträgt. Zugleich wird die Anströmgeschwindigkeit des die katalytischen Rekombinatoren 34, 40 der unteren katalytischen Zone 36 und - sofern vorhanden - der oberen katalytischen Zone 38 anströmenden Gasstroms durch geeignete Konturierung der Strömungswege auf weniger als 5 m/s eingestellt. Damit einhergehend wird erreicht, dass die Konzentration von Wasserstoff H₂ und/oder Kohlenmonoxid CO im Bereich der Einlassmündung 22 der Druckentlastungsleitung 10 weniger als 50 %, vorzugsweise weniger als 30 % der entsprechenden Konzentration im Bereich der unteren Einströmöffnung 30 des Strömungskanals 26 - gemessen in Strömungsrichtung noch vor den katalytischen Rekombinatoren 34 - beträgt. Durch diese Maßnahmen wird trotz der Kühlung des Druckentlastungsstroms in der Kühlvorrichtung 42 und in den nachgeschalteten Systemkomponenten und trotz der damit möglicherweise verbundenen partiellen Kondensation enthaltener Dampfbestandteile verhindert, dass sich in den stromabwärtigen Abschnitten der Druckentlastungsleitung 10 detonationsfähige kritische explosive Gasgemische ansammeln. Damit wird insbesondere eine Gefährdung der Integrität der außerhalb der Sicherheitshülle angeordneten Filter- und Reinigungseinrichtungen 18 vermieden.

Eine Mehrzahl von Gasstrom-Behandlungsvorrichtungen 24 und zugehörigen Druckentlastungsleitungen 10 des Druckentlastungssystems 12 ist bevorzugt im unteren Drittel der Gesamthöhe der Sicherheitshülle 4 angeordnet. Mehrere Druckentlastungsleitungen 10 können, wie in FIG. 1 und 2 schematisch angedeutet, noch innerhalb der Sicherheitshülle 4 zusammengeführt sein, um die Anzahl der Durchführungen 46 gering zu halten. Die zusätzlichen, nicht unmittelbar auf den Druckentlastungsstrom einwirkenden katalytischen Rekombinatoren 20 sind bevorzugt in größerer Höhe innerhalb der Sicherheitshülle 4 angeordnet, insbesondere im mittleren und auch im oberen Drittel.

In FIG. 2 ist eine Variante der Gasstrom-Behandlungsvorrichtung 24 nebst nachgeschalteter Kühlvorrichtung 42 dargestellt, die in modularer Kastenbauweise verwirklich ist. Die eingezeichneten Strömungspfeile charakterisieren das Strömungsfeld im Entlastungsbetrieb. Zwischen beiden Modulen befindet sich ein kastenförmiger Eintrittssammler 54, der das über die Einlassmündung 22 aus dem Strömungskanal 26 mit den katalytischen Rekombinatoren 34, 40 eintretende, in Bezug auf H₂/CO konzentrationsmäßig abgereicherte Gasgemisch auf die parallel geschalteten Rohrleitungen 55 der Kühlvorrichtung 42 verteilt. Die Rohrleitungen 55 können als Rippenrohre ausgestaltet oder mit durchströmbaren Plattenelementen und dergleichen versehen sein, wie durch die mit geschwungener Linie umrandeten Detailbeispiele angedeutet ist. Entsprechend werden die parallelen Teilströme anschließend wieder durch einen kastenförmigen Austrittssammler 56 vereinigt. Ein sich im oberen Bereich der Kühlvorrichtung 42 ausbildendes Strahlungswärmefeld, durch das - neben dem konvektiven Wärmetransport über die Containmentatmosphäre - ebenfalls Wärme von dem in den Rohrleitungen 55 geführten Ventgasstrom abtransportiert wird, ist durch geschlängelte Pfeile angedeutet. Eine Durchflussbegrenzung durch die insgesamt mit 10 bezeichnete Druckentlastungsleitung ist hier beispielhaft durch ein als Ringblende 58 ausgestaltetes Drosselventil 50 realisiert, welches im Übergang vom Austrittssammler 56 zu dem abgehenden, zur Containmentdurchführung führenden Rohrleitungsstück angeordnet ist.

**Bezugszeichenliste**

| | | | |
|---|---|---|---|
| 2 | kerntechnische Anlage | CO | Kohlenmonoxid |
| 4 | Sicherheitshülle | CO₂ | Kohlendioxid |
| 6 | Innenraum | H₂ | Wasserstoff |
| 8 | Außenraum | H₂O | Wasser |
| 10 | Druckentlastungsleitung | O₂ | Sauerstoff |
| 12 | Druckentlastungssystem | | |
| 14 | Absperrventil | | |
| 16 | Kamin | | |
| 18 | Filter- und Reinigungsvorrichtung | | |
| 20 | katalytischer Rekombinator | | |
| 22 | Einlassmündung | | |
| 24 | Gasstrom-Behandlungsvorrichtung | | |
| 26 | Strömungskanal | | |
| 28 | Mantelfläche | | |
| 30 | Einströmöffnung | | |
| 32 | Ein- und Ausströmöffnung | | |
| 34 | katalytisches Element | | |
| 36 | untere katalytische Zone | | |
| 38 | obere katalytische Zone | | |
| 40 | katalytisches Element | | |
| 42 | Kühlvorrichtung | | |
| 44 | Strömungskanal | | |
| 46 | Durchführung | | |
| 48 | Thermoschutzverkleidung | | |
| 50 | Drosselventil | | |
| 52 | Drosselventil | | |
| 54 | Eintrittssammler | | |
| 55 | Rohrleitung | | |
| 56 | Austrittssammler | | |
| 58 | Ringblende | | |

## Patentansprüche

1. Kerntechnische Anlage (2) mit einer Sicherheitshülle (4) und mit mindestens einer aus der Sicherheitshülle (4) herausgeführten, mit einem Absperrventil (14) verschließbaren Druckentlastungsleitung (10), durch die im Entlastungsbetrieb bei geöffnetem Absperrventil (14) ein Druckentlastungsstrom strömen kann, wobei der jeweiligen Druckentlastungsleitung (10) einlassseitig eine innerhalb der Sicherheitshülle (4) befindliche Gasstrom-Behandlungsvorrichtung (24) vorgeschaltet ist, die einen von einer seitlichen Mantelfläche (28) umschlossenen, kaminartigen Strömungskanal (26) mit einer unteren Einströmöffnung (30) und mit einer oberen Ein- und Ausströmöffnung (32) aufweist, wobei oberhalb oder im Bereich der unteren Einströmöffnung (30) eine erste Gruppe von katalytischen Elementen (34) zum Abbau von Wasserstoff (H₂) und/oder Kohlenmonoxid (CO) im Strömungskanal (26) angeordnet ist, und wobei die Druckentlastungsleitung (10) eine Einlassmündung (22) aufweist, die oberhalb der ersten Gruppe von katalytischen Elementen (34) und unterhalb der oberen Ein- und Ausströmöffnung (32) in der Mantelfläche (28) angeordnet ist, so dass bei einem kritischen Störfall oder Unfall mit Freisetzung von Wasserstoff (H₂) und/oder Kohlenmonoxid (CO) in der Sicherheitshülle (4) in einem dem Entlastungsbetrieb vorausgehenden Konvektionsbetrieb bei geschlossenem Absperrventil (14) der Strömungskanal (26) nach dem Prinzip der Naturkonvektion von unten nach oben von einem in der Sicherheitshülle (4) vorhandenen Gasgemisch durchströmt wird, und im Entlastungsbetrieb das Gasgemisch nach dem Prinzip der Zwangsüberströmung von unten sowie vorzugsweise auch von oben in den Strömungskanal (26) einströmt und als Druckentlastungstrom über die Druckentlastungsleitung (10) abströmt.

2. Kerntechnische Anlage (2) nach Anspruch 1, wobei oberhalb der Einlassmündung (22) der Druckentlastungsleitung (10) und unterhalb oder im Bereich der oberen Ein- und Ausströmöffnung (32) des Strömungskanals (10) eine zweite Gruppe von katalytischen Elementen (40) zum Abbau von Wasserstoff (H₂) und/oder Kohlenmonoxid (CO) im Strömungskanal (26) angeordnet ist.

3. Kerntechnische Anlage (2) nach Anspruch 1 oder 2, wobei Durchflussbegrenzungsmittel (50, 52) in der Druckentlastungsleitung (10) vorhanden sind, die im Hinblick auf die Leistung der katalytischen Elemente (34, 40) derart eingestellt sind, dass im Entlastungbetrieb die Konzentration von Wasserstoff (H₂) und/oder Kohlenmonoxid (CO) im Bereich der Einlassmündung (22) der Druckentlastungsleitung (10) weniger als 50 %, vorzugsweise weniger als 30 %, der entsprechenden Konzentration im Bereich der unteren Einströmöffnung (30) des Strömungskanals (26) beträgt.

4. Kerntechnische Anlage (2) nach Anspruch 3, wobei die Durchflussbegrenzungsmittel (50, 52) derart eingestellt sind und die Geometrie des Strömungskanals (26) derart gewählt ist, dass der im Entlastungsbetrieb in der Druckentlastungsleitung (10) vorhandene Massenstrom maximal 100 %, vorzugsweise weniger als 80 %, des im Konvektionsbetrieb vorhandenen Massenstroms im Strömungskanal (26) beträgt.

5. Kerntechnische Anlage (2) nach Anspruch 3 oder 4, wobei die Durchflussbegrenzungsmittel (50, 52) derart eingestellt sind und die Geometrie des Strömungskanals (26) derart gewählt ist, dass die Anströmgeschwindigkeit an den katalytischen Elementen (34, 40) im Entlastungsbetrieb weniger als 5 m/s, vorzugsweise weniger als 3 m/s, beträgt.

6. Kerntechnische Anlage (2) nach einem der Ansprüche 1 bis 5, wobei die katalytischen Elemente (34, 40) hinsichtlich ihrer Betriebstemperatur im Entlastungsbetrieb derart ausgelegt sind, dass sie bei einer Wasserstoffkonzentration des anströmenden Gasgemisches von mehr als 7 Vol.-% als Zünder wirken.

7. Kerntechnische Anlage (2) nach einem der Ansprüche 1 bis 6, wobei die jeweilige Gasstrom-Behandlungsvorrichtung (24) in Bezug auf die Gesamthöhe der Sicherheitshülle (4) im unteren Drittel, vorzugsweise im unteren Viertel, angeordnet ist.

8. Kerntechnische Anlage (2) nach Anspruch 7, wobei mehrere in Bezug auf die Gesamthöhe der Sicherheitshülle (4) im unteren Drittel angeordnete Gasstrom-Behandlungsvorrichtungen (24) für den Druckentlastungsstrom sowie mehrere darüber liegend angeordnete, nicht direkt auf den Druckentlastungsstrom einwirkende, zusätzliche katalytische Rekombinatoren (20) zum Abbau von Wasserstoff (H₂) und/oder Kohlenmonoxid (CO) vorhanden sind, und wobei die Gasstrom-Behandlungsvorrichtungen (24) zusammen weniger als 20 % der verfügbaren Gesamtrekombinationsleistung erbringen.

9. Kerntechnische Anlage (2) nach einem der Ansprüche 1 bis 8, wobei im Konvektionsbetrieb eine Luftwechselzahl in der Sicherheitshülle (4) von L < 0,3 h, vorzugsweise L < 0,1 h realisiert ist.

10. Kerntechnische Anlage (2) nach einem der Ansprüche 1 bis 9, wobei in die Druckentlastungsleitung (10) eine innerhalb der Sicherheitshülle (4) befindliche Kühlvorrichtung (42) für den Druckentlastungsstrom geschaltet ist.

11. Kerntechnische Anlage (2) nach Anspruch 10, wobei die Kühlvorrichtung (42) für eine konvektive Rückkühlung durch das in der Sicherheitshülle (4) befindliche Gasgemisch und/oder Verdunstungskühlung ausgelegt ist.

12. Kerntechnische Anlage (2) nach Anspruch 10 oder 11, wobei die Kühlvorrichtung (42) hinsichtlich ihrer Kühlleistung dafür ausgelegt ist, den Druckentlastungsstrom von einer Eingangstemperatur im Bereich von etwa 400 bis 500 °C auf eine Ausgangstemperatur im Bereich von etwa 150 bis 300 °C zu kühlen.

13. Kerntechnische Anlage (2) nach einem der Ansprüche 1 bis 12, wobei die Druckentlastungsleitung (10) im Bereich der Durchführung durch die Sicherheitshülle (4) mit einer Thermoschutzverkleidung (48) versehen ist.

14. Kerntechnische Anlage (2) nach einem der Ansprüche 1 bis 13, wobei die katalytischen Elemente (34, 40) auf der Basis der Edelmetalle Palladium und/oder Platin und/oder Vanadium auf keramischen Trägern und/oder auf metallischen Trägern mit keramischer Beschichtung aufgebaut sind und mehr als 0,2 Gew.-%, vorzugsweise mehr als 0,5 Gew.-% Edelmetallanteil in Bezug auf den Träger aufweisen.

15. Kerntechnische Anlage (2) nach einem der Ansprüche 1 bis 14, wobei in einem außerhalb der Sicherheitshülle (4) befindlichen Abschnitt der Druckentlastungsleitung (10) Filter und/oder Wäscher (18) zur Reinigung des Druckentlastungsstroms und zur Aktivitätsrückhaltung angeordnet sind.

## Claims

1. Nuclear plant (2) having a containment shell (4) and having at least one pressure relief line (10), which passes out of the containment shell (4) and can be sealed by a shut-off valve (14), and through which a pressure relief flow can flow during relief operation when the shut-off valve (14) is open, wherein a gas flow treatment device (24), located within the containment shell (4), is provided upstream from the respective pressure relief line (10) on the inlet side, and comprises a chimney-like flow duct (26), which is enclosed by a lateral casing (28) and which has a lower inflow opening (30) and an upper inflow and outflow opening (32), wherein a first group of catalytic elements (34) for eliminating hydrogen (H₂) and/or carbon monoxide (CO) are arranged in the flow duct (26) above or in the region of the lower inflow opening (32), and wherein the pressure relief line (10) has an inlet mouth (22) which is arranged above the first group of catalytic elements (34) and below the upper inflow and outflow opening (32) in the casing (28) in such a way that in the event of a critical fault or emergency with release of hydrogen (H₂) and/or carbon monoxide (CO) in the containment shell (4), during convection operation preceding the relief operation, when the shut-off valve (14) is closed the flow duct (26) is flowed through from bottom to top by a gas mixture present in the containment shell (4) by the principle of natural convection, and during relief operation the gas mixture flows into the flow duct (26) from below and preferably also from above by the principle of forced overflow and flows away via the pressure relief line (10) as a pressure relief flow.

2. Nuclear plant (2) according to claim 1, wherein a second group of catalytic elements (40) for eliminating hydrogen (H₂) and/or carbon monoxide (CO) in the flow duct (26) is arranged above the inlet mouth (22) of the pressure relief line (10) and below or in the region of the upper inflow and outflow opening (32) of the flow duct (10).

3. Nuclear plant (2) according to either claim 1 or claim 2, wherein through-flow limitation means (50, 52) are provided in the pressure relief line (10), and are adjusted in relation to the power of the catalytic elements (34, 40) in such a way that during relief operation the concentration of hydrogen (H₂) and/or carbon monoxide (CO) in the region of the inlet mouth (22) of the pressure relief line (10) is less than 50 %, preferably less than 30 %, of the corresponding concentration in the region of the lower inflow opening (30) of the flow duct (26).

4. Nuclear plant (2) according to claim 3, wherein the through-flow limitation means (50, 52) are adjusted and the shape of the flow duct (26) selected in such a way that the mass flow occurring in the pressure relief line (10) during relief operation is at most 100 %, preferably less than 80 %, of the mass flow in the flow duct (26) during convection operation.

5. Nuclear plant (2) according to either claim 3 or claim 4, wherein the through-flow limitation means (50, 52) are adjusted and the shape of the flow duct (26) selected in such a way that the flow speed onto the catalytic elements (34, 40) during relief operation is less than 5 m/s, preferably less than 3 m/s.

6. Nuclear plant (2) according to any of claims 1 to 5, wherein the catalytic elements (34, 40) are configured in such a way, as regards the operating temperature thereof during relief operation, that they act as igniters at a hydrogen concentration of more than 7 vol.% in the incoming gas mixture.

7. Nuclear plant (2) according to any of claims 1 to 6, wherein the respective gas flow treatment device (24) is arranged in the lower third, preferably in the lower quarter, in relation to the total height of the containment shell (4).

8. Nuclear plant (2) according to either claim 7, wherein there are a plurality of gas flow treatment devices (24) for the pressure relief flow, arranged in the lower third in relation to the total height of the containment shell (4), and a plurality of catalytic recombiners (20), arranged positioned above and not acting directly on the pressure relief flow, for eliminating hydrogen (H₂) and/or carbon monoxide (CO), and wherein the gas flow treatment devices (24) together bring about less than 20 % of the total available recombination power.

9. Nuclear plant (2) according to any of claims 1 to 8, wherein an air exchange number in the containment shell (4) of L < 0.3 h, preferably L < 0.1 h, is achieved during convection operation.

10. Nuclear plant (2) according to any of claims 1 to 9, wherein a cooling device (42), located inside the containment shell (4), for the pressure relief flow is connected into the pressure relief line (10).

11. Nuclear plant (2) according to claim 10, wherein the cooling device (42) is configured for convective re-cooling by way of the gas mixture located in the safety containment (4) and/or evaporation cooling

12. Nuclear plant (2) according to either claim 10 or claim 11, wherein the cooling device (42) is configured, in terms of the cooling power thereof, to cool the pressure relief flow from an input temperature in the range of approximately 400 to 500 °C to an output temperature in the range of approximately 150 to 300 °C.

13. Nuclear plant (2) according to any of claims 1 to 12, wherein the pressure relief line (10) is provided with a thermal protection cladding (48) in the region of the lead-through through the containment shell (4).

14. Nuclear plant (2) according to any of claims 1 to 13, wherein the catalytic elements (34, 40) are constructed on the basis the precious metals of palladium and/or platinum and/or vanadium on ceramic substrates and/or on metal substrates having a ceramic coating, and comprise a precious metal proportion of more than 0.2 wt.%, preferably more than 0.5 wt.%, based on the substrate.

15. Nuclear plant (2) according to any of claims 1 to 11, wherein filters and/or scrubbers (18) for purifying the pressure relief flow and for activity re-cooling are arranged in a portion of the pressure relief line (10) located outside the containment shell (4).

## Revendications

1. Installation nucléaire (2) avec une enceinte de confinement (4), et avec au moins une conduite de détente de pression (10) sortant de l'enceinte de confinement (4), pouvant être fermée par une vanne d'arrêt (14), et à travers laquelle un flux de détente de pression peut s'écouler dans le mode de détente quand la vanne d'arrêt (14) est ouverte, dans laquelle un dispositif de traitement du flux de gaz (24) situé à l'intérieur de l'enceinte de confinement (4) est monté, côté admission, en amont de la conduite de détente de pression (10) respective et présente une gaine d'écoulement (26) du type cheminée, entourée par une surface d'enveloppe (28) latérale, avec une ouverture d'entrée de flux (30) inférieure et avec une ouverture d'entrée et de sortie de flux (32) supérieure, dans laquelle un premier groupe d'éléments catalytiques (34) est disposé dans la gaine d'écoulement (26) au-dessus ou dans la zone de l'ouverture d'entrée de flux (30) inférieure pour la décomposition d'hydrogène (H₂) et/ou de monoxyde de carbone (CO), et dans laquelle la conduite de détente de pression (10) présente un orifice d'entrée (22) qui est disposé au-dessus du premier groupe d'éléments catalytiques (34) et au-dessous de l'ouverture d'entrée et de sortie de flux (32) supérieure dans la surface d'enveloppe (28) de telle sorte que, en cas de panne ou d'accident critique avec dégagement d'hydrogène (H₂) et/ou de monoxyde de carbone (CO) dans l'enceinte de confinement (4) dans un mode de convection précédant le mode de détente quand la vanne d'arrêt (14) est fermée, la gaine d'écoulement (26) est parcourue de bas en haut selon le principe de convection naturelle par un mélange gazeux présent dans l'enceinte de confinement (4) et, dans le mode de détente, le mélange gazeux afflue dans la gaine d'écoulement (26) selon le principe de l'écoulement forcé à partir du bas ainsi que de préférence également à partir du haut, et s'écoule en tant que flux de détente de pression via la conduite de détente de pression (10).

2. Installation nucléaire (2) selon la revendication 1, dans laquelle un deuxième groupe d'éléments catalytiques (40) est disposé au-dessus de l'orifice d'entrée (22) de la conduite de détente de pression (10) et au-dessous ou dans la zone de l'ouverture d'entrée et de sortie de flux (32) supérieure de la gaine d'écoulement (10) pour la décomposition d'hydrogène (H₂) et/ou de monoxyde de carbone (CO) dans la gaine d'écoulement (26).

3. Installation nucléaire (2) selon la revendication 1 ou 2, dans laquelle des moyens de limitation de débit (50, 52) sont présents dans la conduite de détente de pression (10) et sont réglés, en ce qui concerne la puissance des éléments catalytiques (34, 40), de telle sorte que, dans le mode de détente, la concentration d'hydrogène (H₂) et/ou de monoxyde de carbone (CO), dans la plage de l'orifice d'entrée (22) de la conduite de détente de pression (10), est inférieure à 50 %, de préférence inférieure à 30 %, de la concentration correspondante dans la zone de l'ouverture d'entrée de flux (30) inférieure de la gaine d'écoulement (26).

4. Installation nucléaire (2) selon la revendication 3, dans laquelle les moyens de limitation de débit (50, 52) sont réglés de telle sorte, et la géométrie de la gaine d'écoulement (26) est choisie de telle sorte que le flux massique présent dans le mode de détente dans la conduite de détente de pression (10) représente au maximum 100 %, de préférence moins de 80 %, du flux massique présent dans le mode de convection dans la gaine d'écoulement (26).

5. installation nucléaire (2) selon la revendication 3 ou 4, dans laquelle les moyens de limitation de débit (50, 52) sont réglés de telle sorte, et la géométrie de la gaine d'écoulement (26) est choisie de telle sorte que la vitesse d'afflux au niveau des éléments catalytiques (34, 40) dans le mode de détente est inférieure à 5 m/s, de préférence inférieure à 3 m/s.

6. Installation nucléaire (2) selon l'une des revendications 1 à 5, dans laquelle les éléments catalytiques (34, 40) sont, en ce qui concerne leur température de fonctionnement dans le mode de détente, conçus de telle sorte que, pour une concentration en hydrogène du mélange gazeux qui afflue supérieure à 7%-vol., ces éléments agissent en tant qu'allumeurs.

7. Installation nucléaire (2) selon l'une des revendications 1 à 6, dans laquelle le dispositif de traitement du flux de gaz (24) respectif est, par rapport à la hauteur totale de l'enceinte de confinement (4), disposé dans le tiers inférieur, de préférence dans le quart inférieur.

8. Installation nucléaire (2) selon la revendication 7, dans laquelle il y a plusieurs dispositifs de traitement de flux de gaz (24) pour le flux de détente de pression qui sont disposés, par rapport à la hauteur totale de l'enceinte de confinement (4), dans le tiers inférieur, ainsi que plusieurs recombinateurs catalytiques (20) supplémentaires disposés au-dessus, n'agissant pas directement sur le flux de détente de pression, destinés à la décomposition d'hydrogène (H₂) et/ou de monoxyde de carbone (CO), et dans laquelle les dispositifs de traitement de flux de gaz (24) produisent conjointement moins de 20 % de la puissance de recombinaison totale disponible.

9. Installation nucléaire (2) selon l'une des revendications 1 à 8, dans laquelle un taux de renouvellement d'air dans l'enceinte de confinement (4) de L < 0,3 h, de préférence de L < 0,1 h, est réalisé dans le mode de convection.

10. Installation nucléaire (2) selon l'une des revendications 1 à 9, dans laquelle un dispositif de refroidissement (42) pour le flux de détente de pression situé à l'intérieur de l'enceinte de confinement (4) est monté dans la conduite de détente de pression (10).

11. Installation nucléaire (2) selon la revendication 10, dans laquelle le dispositif de refroidissement (42) est conçu pour un refroidissement de retour par convection par le mélange gazeux et/ou par le refroidissement par évaporation situé dans l'enceinte de confinement (4).

12. Installation nucléaire (2) selon la revendication 10 ou 11, dans laquelle le dispositif de refroidissement (42) est, en ce qui concerne sa puissance de refroidissement, conçu pour refroidir le flux de détente de pression en le faisant passer d'une température d'entrée dans la plage d'environ 400 à 500 °C à une température de sortie dans la plage d'environ 150 à 300 °C.

13. Installation nucléaire (2) selon l'une des revendications 1 à 12, dans laquelle la conduite de détente de pression (10) est, dans la zone du passage à travers l'enceinte de confinement (4), munie d'un revêtement de protection thermique (48).

14. Installation nucléaire (2) selon l'une des revendications 1 à 13, dans laquelle les éléments catalytiques (34, 40) sont, sur la base des métaux nobles palladium et/ou platine et/ou vanadium, montés sur des supports céramiques et/ou sur des supports métalliques avec revêtement céramique et présentent plus de 0,2 %-poids, de préférence plus de 0,5 %-poids, de fraction de métal noble par rapport au support.

15. Installation nucléaire (2) selon l'une des revendications 1 à 14, dans laquelle des filtres et/ou des épurateurs (18) pour le nettoyage du flux de détente de pression et pour la retenue de l'activité sont disposés dans un tronçon de la conduite de détente de pression (10) situé à l'extérieur de l'enceinte de confinement (4).
